# DEMANDE DE BREVET EUROPEEN

(11) **EP 4 170 554 A1**
(43) Date de publication de la demande: **26.04.2023**
(21) Numéro de dépôt: 22200589.4
(22) Date de dépôt: 10.10.2022
(51) Int. Cl.: G06N 3/08, G06F 1/3231, G06F 1/3234, G06N 3/04

(54) **PROCÉDÉ DE DÉTECTION D ÉVÉNEMENTS OU D ÉLÉMENTS DANS DES SIGNAUX PHYSIQUES PAR LA MISE EN UVRE D'UN RÉSEAU DE NEURONES ARTIFICIELS**

(30) Priorité: 25.10.2021 FR 2111300
(71) Demandeur: STMicroelectronics (Rousset) SAS, 13790 Rousset (FR)
(72) Inventeur: DEMAJ, Pierre, 06200 NICE (FR); FOLLIOT, Laurent, 06620 GOURDON (FR)
(74) Mandataire: Casalonga

(57) **Abrégé**

Selon un aspect, il est proposé un procédé de détection d'événements ou d'éléments dans des signaux physiques par la mise en œuvre d'un réseau de neurones artificiels, le procédé comprenant :
- une évaluation (26, 33) d'une probabilité de présence de l'événement ou de l'élément par une mise en œuvre du réseau de neurones,
- une mise en œuvre (21) du réseau de neurones selon un mode nominal (MN) en prenant en entrée un signal physique présentant une première résolution, dite résolution nominale, lorsque la probabilité de présence de l'événement ou de l'élément est supérieure à un seuil, et
- une mise en œuvre (28) du réseau de neurones selon un mode de consommation réduite (MCR) en prenant en entrée un signal physique présentant une deuxième résolution, dite résolution réduite, inférieure à ladite première résolution, lorsque la probabilité de présence de l'événement ou de l'élément est inférieure audit seuil.

## Description

Des modes de réalisation et de mise en œuvre concernent les réseaux de neurones artificiels configurés pour détecter des événements ou des éléments dans des signaux physiques, c'est-à-dire des signaux physiques représentatifs d'entités physiques, notamment des images, et plus particulièrement l'optimisation de la consommation d'énergie résultant de la mise en œuvre de tels réseaux de neurones artificiels, notamment par un microcontrôleur.

Les réseaux de neurones artificiels peuvent être utilisés pour détecter des événements ou des éléments dans des signaux physiques reçus en entrée de ces réseaux de neurones. Par exemple, les réseaux de neurones artificiels peuvent prendre en entrée des images et sont utilisés pour détecter des événements ou des éléments dans ces images, notamment pour détecter des objets ou des personnes.

L'exécution d'un réseau de neurones peut impliquer une quantité importante de calculs à effectuer. Or, plus le nombre de calculs à effectuer est important, plus une consommation d'énergie résultant de l'exécution du réseau de neurones est élevée. La consommation d'énergie résultant de l'exécution d'un réseau de neurones dépend donc du temps d'exécution du réseau de neurones qui est notamment lié à sa complexité .

Dans certaines applications, les réseaux de neurones peuvent être mis en œuvre par des microcontrôleurs présentant une autonomie en énergie limitée. En effet, les microcontrôleurs peuvent ne pas être alimentés directement par un réseau de distribution électrique mais peuvent être mis sous tension par une batterie autonome présentant une capacité de stockage d'énergie limitée. Par exemple, les réseaux de neurones peuvent être mis en œuvre par des microcontrôleurs intégrés dans des objets connectés comportant des batteries pour alimenter ces microcontrôleurs.

Il est particulièrement important dans ces applications de réduire la consommation d'énergie du microcontrôleur mettant en œuvre le réseau de neurones afin d'augmenter la durée de vie de la batterie, de sorte que le microcontrôleur puisse être utilisé le plus longtemps possible avant un rechargement de la batterie, voire un remplacement du dispositif comportant le microcontrôleur, non pratique et coûteux.

Afin de réduire la consommation d'énergie du microcontrôleur, il est possible d'arrêter d'utiliser le réseau de neurones pendant certaines périodes. Néanmoins, une telle solution présente l'inconvénient de ne pas permettre de détecter d'événements ou d'éléments dans les signaux physiques reçus en entrée pendant ces périodes.

Il est également possible de simplifier le réseau de neurones artificiels pour réduire les calculs à effectuer lors de l'exécution du réseau de neurones simplifié. Par exemple, la quantification d'un réseau de neurones permet de le simplifier. Néanmoins, les réseaux de neurones simplifiés peuvent entraîner une perte de performances du réseau de neurones dans la détection des événements ou des éléments dans les signaux physiques reçus en entrée de ce réseau de neurones.

Il convient donc de proposer une solution permettant de réduire la consommation d'énergie d'un microcontrôleur mettant en œuvre un réseau de neurones adapté pour détecter des événements ou des éléments tout en préservant de bonnes performances de détection.

Selon un aspect, il est proposé un procédé de détection d'événements ou d'éléments dans des signaux physiques par la mise en œuvre d'un réseau de neurones artificiels, dans lequel le réseau de neurones artificiels présente un unique jeu de poids et est configuré pour prendre en entrée des signaux physiques pouvant prendre différentes résolutions, le réseau de neurones pouvant être mis en œuvre selon :
- un mode nominal dans lequel le réseau de neurones est exécuté en prenant en entrée un signal physique présentant une première résolution, dite résolution nominale, ou
- un mode de consommation réduite dans lequel le réseau de neurones est exécuté en prenant en entrée un signal physique présentant une deuxième résolution, dite résolution réduite, inférieure à ladite première résolution, la résolution réduite du signal physique en entrée du réseau de neurones étant un multiple d'un rapport entre la résolution nominale du signal physique en entrée et une résolution en sortie du réseau de neurones lorsque le signal physique pris en entrée est de résolution nominale,
le procédé comprenant :
- une évaluation d'une probabilité de présence de l'événement ou de l'élément par une mise en œuvre du réseau de neurones,
- une mise en œuvre du réseau de neurones selon le mode nominal lorsque la probabilité de présence de l'événement ou de l'élément est supérieure à un seuil, et
- une mise en œuvre du réseau de neurones selon le mode de consommation réduite lorsque la probabilité de présence de l'événement ou de l'élément est inférieure audit seuil.

Le réseau est alors un réseau de neurones multi-résolutions. Ce réseau de neurones multi-résolutions peut être mis en œuvre par un microcontrôleur alimenté en énergie par une batterie. Un tel réseau de neurones est entraîné en prenant en entrée des signaux physiques de résolutions différentes, et en évaluant les performances de ce réseau de neurones en utilisant ladite résolution nominale. Par exemple, un réseau de neurones multi-résolution pour la détection d'événements ou d'éléments dans une image peut prendre en entrée des images de résolutions différentes.

La consommation d'énergie résultant de la mise en œuvre d'un tel réseau de neurones multi-résolution varie en fonction de la résolution du signal physique en entrée du réseau de neurones. En particulier, plus la résolution du signal physique en entrée est petite moins l'exécution du réseau de neurones nécessite d'effectuer de calculs avant de générer des données en sortie du réseau de neurones. Ainsi, plus la résolution du signal physique en entrée est petite, plus la consommation d'énergie résultant de la mise en œuvre du réseau de neurones est réduite.

En particulier, les données en sortie correspondent aux données de la carte de caractéristiques de sortie du réseau de neurones (en anglais « output feature map »). Il est ensuite possible de rajouter une couche de classification ou une couche de détection prenant en entrée ces données de la carte de caractéristiques de sortie du réseau de neurones ;

Ainsi, dans un procédé selon l'invention, le mode de consommation réduite permet de réduire la consommation d'énergie en prenant en entrée un signal physique à résolution réduite par rapport au signal physique pris en entrée dans le mode nominal.

Le mode de consommation réduite peut être légèrement moins performant que le mode nominal. Néanmoins, le mode de consommation réduite est utilisé uniquement lorsque la probabilité de présence d'un événement ou d'un élément est inférieure à un certain seuil. Si la probabilité de présence d'un événement ou d'un élément est supérieure à ce seuil, le réseau de neurones est exécuté dans son mode nominal pour améliorer la détection par rapport au mode de consommation réduite. Cela permet de maintenir de bonnes performances dans la détection d'un événement ou d'un élément. En effet, l'exécution du réseau de neurones dans le mode de consommation réduite permet de continuer de surveiller la présence ou l'absence d'un événement ou d'un élément tout en réduisant la consommation d'énergie. De la sorte, il est possible d'augmenter une durée d'autonomie de la batterie alimentant le microcontrôleur mettant en œuvre le réseau de neurones. L'évaluation de la probabilité de présence de l'événement ou de l'élément est effectuée régulièrement après une ou plusieurs mises en œuvre du réseau de neurones selon le mode nominal ou selon le mode de consommation réduite.

Un tel procédé est relativement simple à mettre en œuvre.

De préférence, ledit seuil est défini selon une sensibilité et/ou une précision souhaitée du réseau de neurones.

Dans un mode de mise en œuvre avantageux, le signal physique en entrée est une image.

Selon un autre aspect, il est proposé un programme d'ordinateur comprenant des instructions qui, lorsque le programme est exécuté par un ordinateur, conduisent celui-ci à mettre en œuvre un réseau de neurones artificiels pour détecter des événements ou des éléments dans des signaux physiques reçus en entrée de ce réseau de neurones, programme dans lequel le réseau de neurones artificiels présente un unique jeu de poids et est configuré pour prendre en entrée des signaux physiques pouvant prendre différentes résolutions, le réseau de neurones pouvant être mis en œuvre selon :
- un mode nominal dans lequel le réseau de neurones est exécuté en prenant en entrée un signal physique présentant une première résolution, dite résolution nominale, ou
- un mode de consommation réduite dans lequel le réseau de neurones est exécuté en prenant en entrée un signal physique présentant une deuxième résolution, dite résolution réduite, inférieure à ladite première résolution, la résolution réduite du signal physique en entrée du réseau de neurones étant un multiple d'un rapport entre la résolution nominale du signal physique en entrée et une résolution en sortie du réseau de neurones lorsque le signal physique pris en entrée est de résolution nominale,
et dans lequel le programme est configuré pour :
- évaluer une probabilité de présence de l'événement ou de l'élément par une mise en œuvre du réseau de neurones,
- mettre en œuvre le réseau de neurones selon le mode nominal lorsque la probabilité de présence de l'événement ou de l'élément est supérieure à un seuil, et
- mettre en œuvre le réseau de neurones selon le mode de consommation réduite lorsque la probabilité de présence de l'événement ou de l'élément est inférieure audit seuil.

Selon un autre aspect, il est proposé un microcontrôleur comprenant :
- une mémoire dans lequel est stocké un programme tel que décrit précédemment, et
- un processeur configuré pour exécuter ledit programme.

D'autres avantages et caractéristiques de l'invention apparaîtront à l'examen de la description détaillée de modes de mise en œuvre et de réalisation, nullement limitatifs, et des dessins annexés sur lesquels :
[Fig 1]

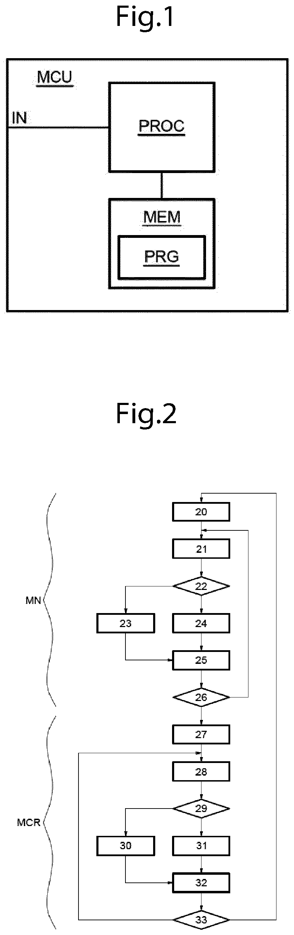

[Fig 2] illustrent schématiquement des modes de réalisation et de mise en œuvre de l'invention.

La figure 1 illustre un microcontrôleur MCU configuré pour pouvoir être alimenté en énergie par une batterie (non représentée). Le microcontrôleur MCU est configuré pour mettre en œuvre un procédé de détection d'événements ou d'éléments dans un signal physique ou plusieurs signaux physiques. Par exemple, le procédé de détection peut permettre de détecter des objets ou des personnes dans des images. Le microcontrôleur MCU comprend une entrée IN configurée pour recevoir le signal physique. Le signal physique peut ainsi être une image d'une scène acquise par une caméra par exemple.

Le microcontrôleur MCU comprend une mémoire MEM dans laquelle est stocké un programme PRG permettant d'exécuter un réseau de neurones artificiels pour détecter des événements ou des éléments dans le signal physique reçu en entrée IN. En particulier, le microcontrôleur MCU comporte un processeur PROC configuré pour exécuter le programme PRG et donc le réseau de neurones artificiels.

Le réseau de neurones peut ainsi prendre en entrée un signal physique dans lequel peuvent survenir des événements ou des éléments et peut générer en sortie des données dans une carte de caractéristiques (en anglais « output feature map). Il est possible ensuite d'ajouter une couche de classification ou bien une couche de détection prenant en entrée ces données de la carte caractéristiques de sortie pour générer des données de détection. En particulier, lorsque le signal physique en entrée est une image et qu'on cherche à détecter des objets dans ce signal physique, les données de détection en sortie de la couche de classification ou de la couche de détection peuvent être une probabilité de présence de l'objet à un endroit donné, une taille de cet objet, une position du centre de cet objet, ou encore une classe de cet objet.

Le réseau de neurones est un réseau de neurones multi-résolution. Le réseau de neurones présente donc un unique jeu de poids mais est configuré pour prendre en entrée des signaux physiques pouvant présenter différentes résolutions.

Par exemple, le réseau de neurones peut prendre en entrée des images de résolutions différentes. En particulier, les images peuvent être fournies au microcontrôleur par une caméra (non représentée sur les figures). La caméra peut alors être adaptées pour modifier la résolution des images acquises. En variante, le microcontrôleur peut être configuré pour pouvoir modifier la résolution d'une image transmise par la caméra pour obtenir une image avec une résolution réduite.

En variante, le signal physique peut être un signal audio délivré par un microphone ou bien un signal délivré par un accéléromètre, un gyroscope, un magnétomètre ou un capteur de temps de vol.

Le réseau de neurones est un réseau ayant été entraîné en prenant en entrée des signaux physiques de différentes résolutions. En particulier, le réseau de neurones est entraîné en prenant en entrée des signaux physiques ayant une résolution nominale et des signaux physiques ayant une résolution réduite. La résolution réduite est une résolution inférieure à la résolution nominale. Une ou plusieurs résolutions réduites peuvent être utilisées pour les signaux physiques reçus en entrée du réseau de neurones. Lorsque les signaux physiques sont des images, la résolution nominale correspond généralement à une résolution nominale de la caméra permettant d'acquérir ces images.

Les performances du réseau de neurones peuvent être évaluées selon les différentes résolutions de signaux physiques reçus en entrée. L'entraînement sert à définir un réseau de neurones dont les performances sont optimales pour la résolution nominale et le moins dégradées possible pour la résolution réduite. Plus particulièrement, lors de l'entraînement du réseau de neurones, les poids du réseau de neurones sont ajustés, puis les performances du réseau modifié sont évaluées selon les différentes résolutions utilisées. Si les performances du réseau de neurones sont satisfaisantes, l'entraînement du réseau est arrêté puis le réseau de neurones peut être quantifié pour réduire un coût en mémoire et un temps d'exécution du réseau de neurones.

Par ailleurs, le réseau de neurones est configuré pour recevoir en entrée un signal physique ayant une résolution différente de la résolution des données de la carte de caractéristiques en sortie du réseau de neurones. Le réseau de neurones présente ainsi un rapport donné entre la résolution nominale en entrée et la résolution de la carte de caractéristiques en sortie du réseau de neurones lorsqu'il prend en entrée un signal physique avec cette résolution nominale. Les résolutions pouvant être prises en entrée du réseau de neurones sont alors des multiples de ce rapport afin d'obtenir une résolution réelle en sortie du réseau de neurones pour chaque résolution pouvant être prise en entrée. Par exemple, dans le cas où le signal physique est une image, si la résolution nominale est de 224x224 et si le rapport entre la résolution nominale en entrée et la résolution de la carte de caractéristiques en sortie du réseau de neurones est de 16, alors le réseau de neurones peut prendre en entrée des résolutions réduites multiples de 16, et notamment les résolutions suivantes : 208x208, 192x192, 176x176.

Ici, le réseau de neurones peut être mis en œuvre selon deux modes de fonctionnement.

Dans un premier mode, dit mode nominal, le réseau de neurones est exécuté en prenant en entrée un signal physique ayant la résolution nominale. Dans un deuxième mode, dit mode de consommation réduite, le réseau de neurones est exécuté en prenant en entrée un signal physique ayant une résolution réduite par rapport à la résolution nominale.

L'exécution du réseau de neurones en mode de consommation réduite nécessite moins de calculs que son exécution en mode nominal. L'exécution du réseau de neurones en mode de consommation réduite permet ainsi de réduire sa consommation d'énergie par rapport à celle en mode nominal. Par exemple, en divisant la résolution d'une image par un nombre y, il est possible de diviser le nombre d'opérations à effectuer par un nombre proche de γ². De la sorte, le temps d'exécution du réseau de neurones est également divisé par un nombre proche de γ². Ainsi, la consommation d'énergie résultant de l'exécution du réseau de neurones est réduite.

La figure 2 illustre un diagramme d'états représentant un procédé de détection d'événements ou d'éléments pouvant être mis en œuvre par le microcontrôleur.

Le procédé consiste à exécuter le réseau de neurones selon le mode nominal lorsque la probabilité de présence d'un événement ou d'un élément est élevée, et à exécuter le réseau de neurones selon le mode de consommation réduite lorsque la probabilité de présence d'un événement ou d'un élément est réduite.

En particulier, ici, le réseau de neurones est exécuté selon le mode nominal MN dans la partie supérieure du diagramme, et exécuté selon le mode de consommation réduite MCR dans la partie inférieure du diagramme.

La probabilité de présence d'un événement ou d'un élément est évaluée à partir d'un nombre de détections obtenues sur une période donnée.

En particulier, le microcontrôleur utilise une mémoire tampon Sb[] (« buffer ») pour dénombrer le nombre d'événements ou des éléments détectés sur une période T1 pour le mode nominal et sur une période T2 pour le mode de consommation réduite. Les périodes T1 et T2 peuvent être les mêmes.

Ainsi, le procédé comprend une étape 20 d'initialisation du mode nominal dans lequel le buffer Sb[] est réinitialisé en mettant à 0 les valeurs Sb[0] à Sb[T1-1].

Ensuite, le procédé comprend une étape 21 d'exécution du réseau de neurones selon le mode nominal. Le réseau de neurones prend alors en entrée un signal physique avec la résolution nominale. L'exécution du réseau de neurones permet de détecter, à une étape 22, la présence ou l'absence de l'événement ou de l'élément dans le signal physique en entrée. Si le réseau de neurones détecte une présence de l'événement ou de l'élément dans le signal physique pour une itération i alors la valeur du buffer Sb[i] est mise à 1 à l'étape 23. Si le réseau de neurones détecte une absence de l'événement ou de l'élément dans le signal physique pour une itération i alors la valeur du buffer Sb[i] est mise à 0 à l'étape 24. Puis, la valeur de l'indice i est incrémentée à l'étape 25 à la suite de l'étape 23 ou 24.

Ensuite, le microcontrôleur vérifie que le buffer est rempli à l'étape 26. Si le buffer n'est pas rempli alors les étapes 21 à 25 sont répétées de façon à remplir le buffer à la fin de la période T1. Lorsque le buffer est rempli, le microcontrôleur est configuré pour comparer, à l'étape 26 également, la valeur moyenne des valeurs du buffer Sb[] à un seuil K1 défini entre 0 et 1. Si cette valeur moyenne est supérieure au seuil K1, alors la probabilité que l'événement ou l'élément soit bien présent est élevée, le réseau de neurones continue alors d'être exécuté selon le mode nominal sur une nouvelle période T1. Les étapes 21 à 26 sont donc réitérées tant que la valeur moyenne des valeurs du buffer à la fin d'une période T1 est supérieure au seuil K1.

Si la valeur moyenne des valeurs du buffer à la fin d'une période T1 est inférieure au seuil K1, alors le réseau de neurones est ensuite exécuté selon le mode de consommation réduite.

En particulier, le procédé comprend une étape 27 d'initialisation du mode de consommation réduite dans lequel le buffer Sb[] est réinitialisé en mettant à 0 les valeurs Sb[0] à Sb[T2-1].

Ensuite, le procédé comprend une étape 28 d'exécution du réseau de neurones selon le mode de consommation réduite. Le réseau de neurones prend alors en entrée un signal physique avec la résolution réduite. L'exécution du réseau de neurones permet de détecter, à l'étape 29, la présence ou l'absence de l'événement ou de l'élément dans le signal physique en entrée. Si le réseau de neurones détecte une présence de l'événement dans le signal physique pour une itération i alors la valeur du buffer Sb[i] est mise à 1 à l'étape 30. Si le réseau de neurones détecte une absence de l'événement ou de l'élément dans le signal physique pour une itération i alors la valeur du buffer Sb[i] est mise à 0 à l'étape 31. Puis, la valeur de l'indice i est incrémentée à l'étape 32 à la suite de l'étape 30 ou 31.

Ensuite, le microcontrôleur vérifie que le buffer est rempli à l'étape 33. Si le buffer n'est pas rempli alors les étapes 28 à 32 sont répétées de façon à remplir le buffer à la fin de la période T2. Lorsque le buffer est rempli, le microcontrôleur est configuré pour comparer, à l'étape 33 également, la valeur moyenne des valeurs du buffer Sb[] à un seuil K2 défini entre 0 et 1. Si cette valeur moyenne est inférieure au seuil K2, alors la probabilité que l'événement ou l'élément soit bien présent est faible, le réseau de neurones continue alors d'être exécuté selon le mode de consommation réduite sur une nouvelle période T2. Les étapes 28 à 33 sont donc réitérées tant que la valeur moyenne des valeurs du buffer à la fin d'une période T2 est inférieure au seuil K2.

Si la valeur moyenne des valeurs du buffer à la fin de la période T2 est supérieure au seuil K2 alors le réseau de neurones est ensuite exécuté selon le mode nominal, en réitérant le procédé à partir de l'étape 20.

Les seuils K1 et K2 peuvent être ajustés selon l'application pour laquelle le réseau de neurones est exécuté. En particulier, les seuils K1 et K2 sont sélectionnés en fonction d'une sensibilité (en anglais « recall ») et/ou d'une précision souhaitée. Néanmoins, il est avantageux d'avoir un seuil K1 supérieur à un seuil de fausse alarme afin d'éviter de détecter des événements ou des éléments absents du signal physique qui empêcheraient l'exécution du réseau de neurones selon le mode de consommation réduite.

Il est également possible d'ajuster les périodes T1 et T2 en fonction de l'heure de la journée, notamment si la présence d'événements ou d'éléments à certains moments de la journée est *a priori* plus probable qu'à d'autres moments. Les périodes T1 et T2 peuvent également être ajustées selon la capacité restante de la batterie alimentant le microcontrôleur. Les périodes T1 et T2 peuvent également être ajustées selon la capacité restante de la batterie alimentant le microcontrôleur, ou également selon l'obscurité autour de la caméra lorsque le signal physique est une image. Les périodes T1 et T2 peuvent également être ajustés à partir de statistiques calculées à partir de la fréquence des détections obtenus par la mise en œuvre du procédé de détection dans l'environnement dans lequel le signal physique est capturé.

Par ailleurs, lorsque les signaux physiques reçus en entrée du réseau de neurones sont une série d'images générées par une caméra, il est possible de réduire le nombre d'images par seconde générées par la caméra lorsque le réseau de neurones est exécuté selon le mode de consommation réduite afin de réduire également la consommation d'énergie requise par l'utilisation de la caméra.

Bien entendu, le procédé décrit ne se limite pas aux modes de mise en œuvre décrits. En particulier, il est possible de modifier le procédé de détection décrit ci-dessus de sorte que si le réseau de neurones en mode de consommation réduite détecte plusieurs événements ou éléments dans un même signal physique en entrée (notamment plusieurs objets dans une même image), alors le réseau de neurones est ensuite exécuté directement selon le mode nominal sans attendre la fin de la période T2. En effet, la détection de plusieurs événements ou éléments dans un même signal physique en entrée augmente la probabilité d'une réelle présence d'au moins un événement ou d'au moins un élément dans ce signal physique en entrée. De même, il est possible d'exécuter directement le réseau de neurones selon le mode nominal sans attendre la fin de la période T2 lorsque deux éléments à détecter se superposent dans le signal physique (notamment dans une image) de façon à augmenter la résolution du signal physique pour améliorer la détection de ces deux éléments.

En outre, dans la description qui précède, le réseau de neurones est mis en œuvre par un microcontrôleur. Néanmoins, il est aussi possible de prévoir d'autres systèmes informatiques pouvant mettre en œuvre le réseau de neurones.

## Revendications

1. Procédé de détection d'événements ou d'éléments dans des signaux physiques par la mise en œuvre d'un réseau de neurones artificiels, dans lequel le réseau de neurones artificiels présente un unique jeu de poids et est configuré pour prendre en entrée des signaux physiques pouvant prendre différentes résolutions, le réseau de neurones pouvant être mis en œuvre selon :
- un mode nominal (MN) dans lequel le réseau de neurones est exécuté en prenant en entrée un signal physique présentant une première résolution, dite résolution nominale, ou
- un mode de consommation réduite (MCR) dans lequel le réseau de neurones est exécuté en prenant en entrée un signal physique présentant une deuxième résolution, dite résolution réduite, inférieure à ladite première résolution, la résolution réduite du signal physique en entrée du réseau de neurones étant un multiple d'un rapport entre la résolution nominale du signal physique en entrée et une résolution en sortie du réseau de neurones lorsque le signal physique pris en entrée est de résolution nominale,
le procédé comprenant :
- une évaluation (26, 33) d'une probabilité de présence de l'événement ou de l'élément par une mise en œuvre du réseau de neurones,
- une mise en œuvre (21) du réseau de neurones selon le mode nominal (MN) lorsque la probabilité de présence de l'événement ou de l'élément est supérieure à un seuil, et
- une mise en œuvre (28) du réseau de neurones selon le mode de consommation réduite (MCR) lorsque la probabilité de présence de l'événement ou de l'élément est inférieure audit seuil.

2. Procédé selon la revendication 1, dans lequel ledit seuil est défini selon une sensibilité et/ou une précision souhaitée du réseau de neurones.

3. Procédé selon l'une quelconque des revendications 1 ou 2, dans lequel le signal physique en entrée est une image.

4. Programme d'ordinateur comprenant des instructions qui, lorsque le programme est exécuté par un ordinateur, conduisent celui-ci à mettre en œuvre un réseau de neurones artificiels pour détecter des événements ou des éléments dans des signaux physiques reçus en entrée de ce réseau de neurones, programme dans lequel le réseau de neurones artificiels présente un unique jeu de poids et est configuré pour prendre en entrée des signaux physiques pouvant prendre différentes résolutions, le réseau de neurones pouvant être mis en œuvre selon :
- un mode nominal (MN) dans lequel le réseau de neurones est exécuté en prenant en entrée un signal physique présentant une première résolution, dite résolution nominale, ou
- un mode de consommation réduite (MCR) dans lequel le réseau de neurones est exécuté en prenant en entrée un signal physique présentant une deuxième résolution, dite résolution réduite, inférieure à ladite première résolution, la résolution réduite du signal physique en entrée du réseau de neurones étant un multiple d'un rapport entre la résolution nominale du signal physique en entrée et une résolution en sortie du réseau de neurones lorsque le signal physique pris en entrée est de résolution nominale,
et dans lequel le programme est configuré pour :
- évaluer (26, 33) une probabilité de présence de l'événement ou de l'élément par une mise en œuvre du réseau de neurones,
- mettre en œuvre (21) le réseau de neurones selon le mode nominal lorsque la probabilité de présence de l'événement ou de l'élément est supérieure à un seuil, et
- mettre en œuvre (28) le réseau de neurones selon le mode de consommation réduite lorsque la probabilité de présence de l'événement ou de l'élément est inférieure audit seuil.

5. Microcontrôleur comprenant :
- une mémoire (MEM) dans lequel est stocké un programme (PRG) selon la revendication 4, et
- un processeur (PROC) configuré pour exécuter ledit programme.
